**Europäisches Patentamt**

**European Patent Office**

**Office européen des brevets**

(11) Veröffentlichungsnummer: **0 019 809**
**A1**

# (12) EUROPÄISCHE PATENTANMELDUNG

(21) Anmeldenummer: 80102709.5

(22) Anmeldetag: **16.05.80**

(51) Int. Cl.³: **A 23 K 1/16,** A 23 K 1/165,
A 23 K 1/17

(30) Priorität: **25.05.79 DE 2921213**

(71) Anmelder: **Henkel Kommanditgesellschaft auf Aktien, -Patentabteilung- Postfach 1100 Henkelstrasse 67, D-4000 Düsseldorf 1 (DE)**

(43) Veröffentlichungstag der Anmeldung: **10.12.80 Patentblatt 80/25**

(72) Erfinder: **Hiller, Günter, Dr., Matthias-Claudius-Strasse 6, D-4006 Erkrath (DE)**
Erfinder: **Pfeiffer, Hans F., Dr., Röntgenstrasse 32, D-5657 Haan (DE)**
Erfinder: **Schneider, Walter, Akazienweg 10, D-4020 Mettmann 2 (DE)**

(84) Benannte Vertragsstaaten: **AT BE CH DE FR GB IT LI NL SE**

(54) **Tierfuttermischung.**

(57)   Tierfuttermischung auf der Basis von Kohlenhydraten, Eiweiss, Fetten, gegebenenfalls üblichen Zusätzen und einer Enzymkombination aus wenigstens einer sauren Protease mit einem Wirkungsbereich von pH 2,5-6,5, bevorzugt einem Präparat aus Aspergillus niger oder Rhizopus rhizopodiformis, und einer neutralen bis alkalischen Protease mit einem Wirkungsbereich von pH 7,0-12,5, bevorzugt aus Bacillus licheniformis P 300, Bacillus natta oder Bacillus subtilis.

Als weitere Zusätze kommen bevorzugt Tierfutter-Antibiotika aus der Gruppe Virginiamycin, Zink-Bacitracin, Flavophospholipol, Tylosin, Spiramycin, Avoparcin, Lincomycin, Oleandomycin, Tetracyclin oder Wachstumsförderer, wie Nitrovin, Olaquindox, Carbadox oder eine wachstumsfördernde Carbonsäure, wie Fumarsäure in Betracht.

ACTORUM AG

4ooo Düsseldorf, den
Henkelstraße 67

P a t e n t a n m e l d u n g

D 5912 EP

"Tierfuttermischung"

Hochleistungstierfutter, wie sie heute üblicherweise in der Intensiv-Tierhaltung verwendet werden, enthalten eine Reihe von Zusatzstoffen mit prophylaktischer und/oder nutritiver Wirkung. Hierzu zählen u. a. Antibiotika und Enzyme. Auch Kombinationen von Antibiotika und Enzymen sind bereits beschrieben worden.

Die in der modernen Intensiv-Tierhaltung verwendeten Futtermischungen sind im allgemeinen in allen Nährstoffkomponenten so weit optimiert, daß eine weitere Verbesserung nicht ohne weiteres möglich erscheint. Überraschenderweise wurde jedoch gefunden, daß auch optimal zusammengesetzte Hochleistungsfutter hinsichtlich der Futterverwertung und/oder des damit erzielbaren Gewichtszuwachses noch deutlich verbessert werden können, wenn man diesen Futtern Kombinationen aus sauren und alkalischen Proteasen, gegebenenfalls in Verbindung mit Futter-Antibiotika oder Wachstumsförderern zusetzt. Die gefundene Wirkung ist insofern besonders überraschend, als ausgesprochen alkalische pH-Werte im vorderen Teil des tierischen Verdauungstraktes nicht vorliegen, so daß mit einer Inaktivierung der alkalischen Protease während der Magenpassage gerechnet werden muß. Dementsprechend haben auch Versuche, alkalische Proteasen alleine als Tierfutterzusatzmittel zu verwenden, in der Praxis keine greifbaren Erfolge gezeigt.

/2

Gegenstand der Erfindung sind Tierfuttermischungen auf der Basis von Kohlenhydraten, Eiweiß, Fetten und gegebenenfalls üblichen Zusatzstoffen, gekennzeichnet durch einen Gehalt an wenigstens einer sauren Protease mit einem Wirkungsbereich von pH 2,5 - 6,5 in einer solchen Menge, daß die enzymatische Aktivität in der Futtermischung 0,05 - 2,5 mTU/g, vorzugsweise 0,1 - 0,5 mTU/g, beträgt, und wenigstens einer neutralen bis alkalischen Protease mit einem Wirkungsbereich von pH 7,0 - 12,5 in einer solchen Menge, daß die enzymatische Aktivität in der Futtermischung 0,1 - 50 PE/g, vorzugsweise 1 - 25 PE/g, beträgt. Vorzugsweise weisen die Tierfuttermischungen einen zusätzlichen Gehalt an Tierfutter-Antibiotika oder Wachstumsförderern auf.

Geeignete saure Proteasen werden vor allem durch Züchten von Mikroorganismen und Abtrennen aus den Nährlösungen erhalten. Die Verfahren hierzu sind bekannt. Besonders bevorzugt werden saure Proteasen aus Aspergillus niger oder aus einem Stamm der Spezies Rhizopus rhizopodiformis entsprechend Patentanmeldung P 25 28 490.6, die ein besonders bereites Wirkungsspektrum im schwach sauren Bereich zwischen pH 2,5 - 6,5 aufweisen. Die sauren Proteasen werden in einer solchen Menge eingesetzt, daß die enzymatische Aktivität in der Futtermischung 0,05 - 2,5 mTU/g, vorzugsweise 0,1 - 0,5 mTU/g beträgt.

Zur Bestimmung der Enzymeinheit (TU) wird die proteolytische Aktivität der Protease nach dem bekannten Prinzip von Anson ermittelt: eine geeignet verdünnte Menge Enzymlösung wird bei 40° C 20 Minuten mit einem gleichen Volumen einer 1,2 %igen Caseinlösung inkubiert, wobei diese 0,6 % Milchsäure, 6 Mol Harnstoff und 0,1 Mol Zitronen- oder Essigsäure enthält. Der pH-Wert der

/3

Caseinlösung wird durch Zusatz von 2 N Natronlauge auf 4,5 eingestellt. Nach der Inkubation wird im Volumenverhältnis 1 : 1 mit o,4 N Trichloressigsäure versetzt, der sich bildende Niederschlag von unverdautem Casein abfiltriert und im Filtrat die beim Abbau entstandenen Protein-Spaltstücke nach einer beliebigen Eiweißbestimmungsmethode ermittelt. Geeignet hierfür ist z. B. das von Layne in Methode of Enzymology 3 (1957) Seiten 448 ff. beschriebene Verfahren.

Für jede Meßprobe muß ein Blindwert angefertigt werden, bei dem zuerst Trichloressigsäure und dann Caseinlösung zugesetzt wird. Dieser Blindwert gibt neben dem Reagenzien-Leerwert den Anteil an niedermolekularen Peptiden an, der bereits vor der Verdauung in der Enzymlösung vorhanden ist. Die Differenz zwischen Haupt- und Blindwert wird bei der angegebenen Methode dann mit der Extinktion verglichen, die eine bestimmte Menge Tyrosin bei dieser Bestimmung liefert. Diese Menge Tyrosin ist dann ein Maß für die proteolytische Aktivität des vorliegenden Enzyms: eine Enzymeinheit (TU) ist diejenige Menge Enzym, die aus einer Caseinlösung in einer Minute Spaltprodukte freisetzt, die die gleiche Extinktion besitzen, wie eine 1 M Tyrosinlösung. Üblich ist die Angabe in mTU = $10^{-3}$ TU.

Geeignete alkalische Proteasen werden ebenfalls in bekannter Weise durch Züchten von Mikroorganismen in geeigneten Nährmedien und Abtrennen des Enzyms nach bekannten Methoden gewonnen. Beispielsweise werden Enzyme aus Bacillus licheniformis, Bacillus natta, Bacillus subtilis, Aspergillus orhyzae, verwendet. Besonders bevorzugt werden alkalische Proteasen aus dem Stamm Bacillus P 3oo der Spezies Bacillus licheniformis entsprechend DE-OS 2o 63 988. Derartige Proteasen besitzen ein Wirkungsspektrum im Bereich von pH 7,o - 12,5, das Wirkungsoptimum liegt etwa bei pH 1o - 11. Die alkalischen Proteasen werden in einer solchen Menge eingesetzt, daß die enzymatische Aktivität in der Futtermischung o,1 - 5o PE/g, vorzugsweise 1 - 25 PE/g beträgt.

Die Bestimmung der Enzymeinheit (PE) erfolgt entsprechend der in "Tenside" 7, 127 - 132 (197o) angegebenen Methode. Als weitere Futtermittelzusätze kommen Tierfutter-Antibiotika oder Wachstumsförderer in Betracht, wie sie aus der Literatur bzw. aus der Praxis der Tierhaltung bekannt sind.

Beispiele für geeignete Antibiotika sind Virginiamycin, Zink-Bacitracin, Flavophospholipol, Tylosin, Avoparcin, Spiramycin, Lincomycin, Oleandomycin, Tetracyclin, Chlortetracyclin, Oxytetracyclin.

Beispiele für geeignete Wachstumsförderer sind Nitrovin, Carbadox, Olaquindox.

Die Antibiotika oder Wachstumsförderer werden in einer Menge von 1 - 1oo ppm, bezogen auf Tierfutter, eingesetzt.

Die Tierfuttermittel können auch eine wchstumswirksame organische Carbonsäure, wie Fumarsäure in einer Menge von o,1 - 5 Gew.-%, enthalten. Außer Fumarsäure sind aus der Literatur noch andere wachstumswirksame niedere Carbonsäuren, z. B. Propionsäure oder Citronensäure bekannt.

/5

- 5 -

Handelsübliche Futtermischungen sind für die speziellen
Bedürfnisse der einzelnen Tierarten möglichst optimal
zusammengestellt. Die Grundlage bilden Kohlenhydrate vor
allem aus Getreidekomponenten, Mais oder dgl.. Als Eiweißträger dienen in erster Linie Sojaschrot, Fischmehl,
Tierkörpermehl, Kleie und dergl.. Fehlende Aminosäuren,
z. B. Methionin, können zusätzlich zugegeben werden. Fette
werden in Form von pflanzlichen oder tierischen Fetten
oder Abfallfetten beigefügt. Zum Körperaufbau werden
ferner Salze, wie Dikalziumphosphat, Kalziumkarbonat,
Kochsalz zugesetzt. Gegebenenfalls wird die Futtermischung
durch Zugabe von Spurenelementen, Vitaminen, Ballaststoffen usw. abgerundet. Auch fermentativ hergestellte
Substanzen wie Einzellerproteine aus Erdölfraktionen
oder Alkoholen, diverse Hefen, Algeneiweiß oder sonstige,
eventuell auch aus Abfallstoffen gewonnene Substanzen
können z. T. in erheblichem Maße Bestandteil der Futterrezeptur sein.

Der erfindungsgemäße Zusatz der Enzymkombination, gegebenenfalls in Verbindung mit den Tierfutter-Antibiotika
oder Wachstumsförderern verbessert die Zuwachsrate und die
Futterverwertung um bis zu 4 % im Vergleich zu entsprechenden, lediglich ein Enzym oder ein Antibiotikum
bzw. einen Wachstumsförderer enthaltenden Kontrollmischungen. Auch gegenüber bekannten Kombinationen aus
einer Protease und einem Antibiotikum bzw. Wachstumsförderer zeichnen sich die erfindungsgemäßen Tierfuttermischungen durch eine verbesserte Zuwachsrate und Futterverwertung sowie eine größere Sicherheit der Wirkung
aus.

Die beanspruchten Kombinationen aus sauren und alkalischen Proteasen und gegebenenfalls Antibiotika und
Wachstumsförderern bewähren sich vor allem in Ferkel-

/6

starter- und -aufzuchtfutter. Sie können jedoch auch für alle anderen Tierarten nützlich sein, z. B. in der Schweinemast, in Legehennenfutter und in der Kälberaufzucht.

Die betreffenden Antibiotika werden zweckmäßig in Form einer Vormischung dem Futter zugesetzt, z. B. gebunden an Sojaextraktionsschrot. Bei Verwendung von mehlförmigen Futterzusammensetzungen werden auch die Enzyme als Vormischung appliziert. Als Trägersubstanz fungiert eine beliebige Futterkomponente, z. B. ebenfalls Sojaschrot. Bei Verwendung dampfpelletierten Futters muß die Zumischung der Enzyme in geeignet stabilisierter Form erfolgen, um eine Desaktivierung durch Feuchtigkeit und Hitze während des Pelletierens zu verhindern. Ein derartiges Verfahren ist z. b. Gegenstand der DE-OS 26 02 26o.

- 7 -

## B e i s p i e l e

### Beispiel 1

150 männliche Masteintagsküken der Herkunft Hubbard wurden in Käfighaltung 6 Wochen lang mit einem einheitlichen Futter der nachstehenden Zusammensetzung gefüttert und nach Abschluß des Versuches das Endgewicht der Tiere sowie die Futterverwertung bestimmt. Die Futtermischungen enthielten

a) keinen Zusatz (Kontrolle)

b) einen Zusatz von o,45 mTU/g Futter saurer Proteasen aus Aspergillus niger und Rhizopus rhizopidiformis

c) einen Zusatz von 35 PE/g einer alkalischen Protease aus Bacillus subtilis oder Bacillus licheniformis P 3oo

d) einen Zusatz von o,45 mTU/g Futter saurer Proteasen aus Aspergillus niger und Rhizopus rhizopodiformis und 35 PE/g Futter alkalischer Protease entsprechend c)

Als Versuchsparameter wurde das Endgewicht der Tiere sowie die Futterverwertung bestimmt. Unter Futterverwertung wird das Verhältnis Futterverbrauch/Zuwachs verstanden.

Futterzusammensetzung (in %)

| | |
|---|---|
| Sojaschrot | 44,5o |
| Mais | 41,45 |
| Maisquellstärke | 5,oo |
| Sojaöl | 5,oo |
| Phosphorsaurer Futterkalk | 1,9o |
| Kohlensaurer Futterkalk | o,95 |
| Natriumchlorid | o,35 |
| DL-Methionin | o,25 |

/8

| Vitaminvormischung | 0,25 |
| Cholinchlorid | 0,25 |
| Coyden 25 | 0,05 |
| Spurenelemente | 0,05 |
| | 100,00 |

Ergebnis

| | Endgewicht (in g) | Futterverwertung |
|---|---|---|
| a) o. Zusatz | 1613 | 1,842 |
| b) m.o,45 mTU/g saurer Proteasen | 1630 | 1,825 |
| c) m.35 PE/g alk. Proteasen | 1618 | 1,849 |
| d) m.o,45 mTU/g saurer Proteasen + 35 PE/g alk.Proteasen | 1645 | 1,809 |

Beispiel 2

1160 Masteintagsküken der Herkunft Hubbard (männl./weibl. 1 : 1) wurden in Bodenhaltung 8 Wochen lang mit einheitlichen Futtermischungen der nachstehenden Zusammensetzungen gefüttert und nach Abschluß des Versuches das Endgewicht der Tiere sowie die Futterverwertung bestimmt. Die Futtermischungen enthielten:

a) keinen Zusatz (Kontrolle)

b) einen Zusatz von 15 ppm Virginiamycin

c) einen Zusatz von 15 ppm Avoparcin

d) einen Zusatz von o,3 mTU/g Futter saurer Proteasen aus Aspergillus niger

e) einen Zusatz von o,3 mTU/g Futter saurer Proteasen aus Aspergillus niger + 2o PE/g Futter alkalischer Protease aus Bacillus licheniformis P 3oo

/9

- 9 -

f) einen Zusatz von 15 ppm Virginiamycin + o,3 mTU/g
   Futter saurer Proteasen aus Aspergillus niger

g) einen Zusatz von 15 ppm Virginiamycin + o,3 mTU/g
   Futter saurer Proteasen aus Aspergillus niger + 2o PE/g
   Futter alkalischer Protease aus Bacillus licheniformis
   P 3oo

h) einen Zusatz von 15 ppm Avoparcin + o,3 mTU/g Futter
   saurer Proteasen aus Aspergillus niger

i) einen Zusatz von 15 ppm Avoparcin + o,3 mTU/g Futter
   saurer Proteasen aus Aspergillus niger + 2o PE/g
   Futter alkalischer Protease aus Bacillus licheniformis
   P 3oo

Als Versuchsparameter wurde das Endgewicht der Tiere sowie die Futterverwertung analog zu Beispiel 1 bestimmt.

Futterzusammensetzung (in %)

|  | Starter 0-4 Wochen | Finisher 4-8 Wochen |
|---|---|---|
| Mais | 1o,oo | 1o,oo |
| Weizen | 58,oo | 62,oo |
| Soja | 2o,oo | 17,5o |
| Fischmehl | 7,4o | 5,5o |
| Fett | 2,5o | 2,3o |
| Futterkalk | o,8o | o,85 |
| Dicalciumphosphat | o,5o | 1,oo |
| Salz | o,2o | o,25 |
| DL-Methionin | o,1o | o,1o |
| Wirkstoff-Prämix | o,5o | o,5o |
|  | 1oo,oo | 1oo,oo |

Ergebnisse nach 8 Wochen

|                          | Endgewicht (in g) | Futterverwertung |
|--------------------------|-------------------|------------------|
| a) o. Zusatz             | 2432              | 2,08             |
| b) m. VGN                | 2445              | 2,06             |
| c) m. AVP                | 2442              | 2,06             |
| d) m. E1                 | 2438              | 2,07             |
| e) m. E2                 | 2436              | 2,08             |
| f) m. E1 + E2            | 2451              | 2,02             |
| g) m. VGN + E1           | 247o              | 2,02             |
| h) m. VGN + E1 + E2      | 2495              | 1,98             |
| i) m. AVP + E1           | 2467              | 2,00             |
| j) m. AVP + E1 + E2      | 2497              | 1,96             |

VGN:    Virginiamycin

AVP:    Avoparcin

E1 :    saure Protease aus Aspergillus niger

E2 :    alkalische Protease aus Bacillus licheniformis
        P 3oo

Beispiel 3

An 21o Ferkel wurde im Gewichtsabschnitt 1o - 25 kg ein
identisch zusammengesetztes Aufzuchtfutter verfüttert,
jedoch

a) ohne Zusatz

b) mit Zusatz von 5o ppm Carbadox

c) mit Zusatz von 5o ppm Tylosin

d) mit Zusatz von 5o ppm Carbadox + o,3 mTU/g Futter
   saurer Proteasen aus Rhizopus rhizopodiformis

e) mit Zusatz von 5o ppm Carbadox + o,3 mTU/g Futter
   saurer Proteasen aus Rhizopus rhizopodiformis + 2o PE/g Futter alkalischer Protease aus Bacillus
licheniformis P 3oo

f) mit Zusatz von 5o ppm Tylosin + o,4 mTU/g Futter
saurer Proteasen aus Aspergillus niger

g) mit Zusatz von 5o ppm Tylosin + o,4 mTU/g saurer
Proteasen aus Aspergillus niger + 15 PE/g Futter alkalischer Protease aus Bacillus licheniformis P 3oo

Die Tiere wurden in Gruppen in Käfigen gehalten und ad
libitum gefüttert. Über regelmäßige Wägungen wurden der
Wachstumsverlauf und die Futterverwertung analog zu Beispiel 1 bestimmt.

Futterzusammensetzung (in %)

| | |
|---|---|
| Weizen | 38,00 |
| Hafenflocken | 2o,oo |
| Weizenkleie | 9,9o |
| Sojafeinmehl | 16,4o |
| Malzkeime | 5,oo |
| Fett | 3,oo |
| Maisstärke/Dextrose | 4,oo |
| Mineralstoff, Vitamine | 3,7o |
| | 1oo,oo |

Ergebnis

| | Tägl.Zunahme (in g) | Futterverwertung |
|---|---|---|
| a) o. Zusatz | 433 | 2,33 |
| b) m. CARB | 471 | 2,15 |
| c) m. TYL | 465 | 2,2o |
| d) m.CARB + E3 | 485 | 2,14 |
| e) m.CARB + E2 + E3 | 498 | 2,1o |
| f) m.TYL + E1 | 472 | 2,17 |
| g) m.TYL + E2 + E1 | 48o | 2,12 |

/12

– 12 –

CARB: Carbadox

TYL: Tylosin

E1: saure Protease aus Aspergillus niger

E2: alkalische Protease aus Bacillus licheniformis
P 3oo

E3: saure Protease aus Rhizopus rhizopodiformis


Beispiel 4

Im Gewichtsabschnitt 3o – 6o kg wurde an 66 Schweine ein jeweils identisches Mastfutter verfüttert, jedoch


a) ohne Zusatz

b) mit Zusatz von o,2 mTU/g Futter saurer Proteasen aus Aspergillus niger und Rhizopus rhizopodiformis

c) mit Zusatz von o,2 mTU/g Futter saurer Proteasen aus Aspergillus niger und Rhizopus rhizopodifirmis + 15 PE/g Futter alkalischer Protease aus Bacillus licheniformis P 3oo


Die Tiere wurden gruppenweise gehalten und nach der DLG Rationsliste (DLG = Deutsche Landwirtschafts Gesellschaft) zweimal täglich gefüttert. Analog zu Beispiel 1 wurde der tägliche Zuwachs und die Futterverwertung bestimmt.


Futterzusammensetzung (in %)

| | |
|---|---|
| Mais | 15,oo |
| Weizen | 2o,oo |
| Gerste | 2o,oo |
| Hafer | 1o,oo |
| Weizenkleie | 8,oo |
| Sojaschrot | 24,oo |
| Mineralfutter | 3,oo |
| | 1oo,oo |

Ergebnis

|  | Tägl.Zunahme (in g) | Futterverwertung |
|---|---|---|
| a) o. Zusatz | 687 | 2,49 |
| b) m. E1 + E 3 | 698 | 2,46 |
| c) m. E2 + (E1 + E3) | 715 | 2,38 |

E1 : saure Protease aus Aspergillus niger

E2 : alkalische Protease aus Bacillus licheniformis P 300

E3 : saure Protease aus Rhizopus rhizopodiformis

- 1 -

"Tierfuttermischung"

Patentansprüche

1. Tierfuttermischung auf der Basis von Kohlenhydraten, Eiweiß, Fetten und gegebenenfalls üblichen Zusatzstoffen, gekennzeichnet durch einen Gehalt an wenigstens einer sauren Protease mit einem Wirkungsbereich von pH 2,5 - 6,5 in einer solchen Menge, daß die enzymatische Aktivität in der Futtermischung 0,05 - 2,5 mTU/g, vorzugsweise 0,1 - 0,5 mTU/g, beträgt, und wenigstens einer neutralen bis alkalischen Protease mit einem Wirkungsbereich von pH 7,0 - 12,5 in einer solchen Menge, daß die enzymatische Aktivität in der Futtermischung 0,1 - 50 PE/g, vorzugsweise 1 - 25 PE/g, beträgt.

2. Tierfuttermischung nach Anspruch 1, dadurch gekennzeichnet, daß die saure Protease aus Aspergillus niger oder aus einem Stamm der Spezies Rhizopus rhizopodiformis, hinterlegt unter der Nummer CBS 227.75 in Centraal Bureau voor Schimmelcultures, Baarn (Nederland), gewonnen worden ist.

3. Tierfuttermischung nach Anspruch 1 oder 2, dadurch gekennzeichnet, daß die alkalische Protease aus Bacillus licheniformis, Bacillus natta oder Bacillus subtilis gewonnen worden ist.

4. Tierfuttermischung nach Anspruch 1 oder 2, dadurch gekennzeichnet, daß die alkalische Protease aus dem Stamm Bacillus P 300 der Spezies Bacillus licheniformis, hinterlegt unter der Nummer OR 48 im Laboratorium voor Microbiologie, Microbenverzameling, Delft, gewonnen worden ist.

- 2 -

5. Tierfuttermischung nach Anspruch 1 - 4, gekennzeichnet durch einen zusätzlichen Gehalt an einem Antibiotikum aus der Gruppe Virginiamycin, Zink-Bacitracin,
Flavophospholipol, Tylosin, Spiramycin, Avoparcin,
Lincomycin, Oleandomycin, Tetracylin, Chlortetracyclin,
Oxytetracyclin in einer Menge von 1 - 1oo ppm.

6. Tierfuttermischung nach Anspruch 1 - 4, gekennzeichnet
durch einen zusätzlichen Gehalt an einem Wachstumsförderer aus der Gruppe Nitrovin, Olaquindox, Carbdox in
einer Menge von 1 - 1oo ppm.

7. Tierfuttermischung nach Anspruch 1 - 4, gekennzeichnet
durch einen zusätzlichen Gehalt an einer wachstumswirksamen organischen Carbonsäure, vorzugsweise Fumarsäure,
in einer Menge von o,1 - 5 Gew.-%.

Europäisches
Patentamt

**EUROPÄISCHER RECHERCHENBERICHT**

0019809
Nummer der Anmeldung

EP 80 10 2709

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>FR - A - 2 338 653</u> (HENKEL) <br> * Anspruch 1; Seite 1, Zeilen 1-6, 18-36; Seite 2, Zeilen 1-8, 18-20, 34-37; Seite 3, Zeilen 1-6 * <br><br> -- | 1-5 |
| X | <u>DE - A - 2 633 105</u> (HENKEL) <br> * Anspruch 1; Seite 3, Zeilen 1-7; Seite 3, Abschnitt 3 - Seite 4, Abschnitt 1 * <br><br> -- | 1-5 |
| X | <u>DE - A - 2 633 106</u> (HENKEL) <br> * Anspruch 1; Seite 3, Zeilen 1-7; Seite 3, Abschnitt 3 - Seite 4, Abschnitt 1 * <br><br> -- | 1-5 |
| X | <u>DE - A - 2 653 480</u> (HENKEL) <br> * Anspruch 1; Seite 3, Abschnitt 3; Seite 4, Abschnitte 1,2 * <br><br> -- | 1-5 |
| X | <u>DE - A - 2 728 850</u> (HENKEL) <br> * Anspruch 1; Seite 3, Abschnitt 1; Seite 3, Abschnitt 3 - Seite 4, Abschnitt 2 * <br><br> -- | 1-5 |
| X | <u>DE - A - 2 751 902</u> (HENKEL) <br> * Anspruch 1; Seite 3, Zeilen 6-12; Seite 4, Abschnitte 1,2 * <br><br> -- | 1-5 |
| D | <u>DE - A - 2 528 490</u> (HENKEL) <br> * Seite 1, Abschnitt 3; Seite 2, | 1,2 |

**KLASSIFIKATION DER ANMELDUNG (Int.Cl. 3)**

A 23 K 1/165
1/16
1/17

**RECHERCHIERTE SACHGEBIETE (Int. Cl. 3)**

A 23 K 1/16
1/165
1/17

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-07-1980 | NUSS |

EPA form 1503.1   06.78

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | Abschnitte 1,2 * | |
| | -- | |
| | DE - A - 2 225 363 (HENKEL) | 1,4 |
| | * Ansprüche; Seite 2, Abschnitte 1,3; Seite 8, Abschnitt 2 * | |
| | -- | |
| | US - A - 2 878 123 (J.F. BEUK et al.) | 1,5 |
| | * Anspruch 1; Spalte 2, Zeilen 42-66; Spalte 3, Zeilen 19-42 * | |
| | -- | |
| | GB - A - 826 033 (IOWA STATE COLLEGE RESEARCH) | 1,5 |
| | * Seite 1, Zeile 80 - Seite 2, Zeile 14; Seite 2, Zeilen 61-82; Beispiele * | |
| | -- | |
| | FR - A - 1 392 752 (TAKEDA CHEMICAL INDUSTRIES) | 1,5 |
| | * Seite 2, Spalte 1, Abschnitt 5 - Spalte 2, letzter Abschnitt * | |
| | -- | |
| | LANDBOUWTIJDSCHRIFT, No. 4, Juli-August 1976, Seiten 1007-1019 Brussel, B. M. CASTEELS et al.: "De invloed van een proteolytisch enzyme op de prestaties van biggen" | |
| | * Seite 1008, "summary"; Seiten 1010,1011, Tabellen 1,2 * | |
| | -- | |
| | ./. | |

| Kategorie | Kennzeichnung des Dokuments mit Angabe, soweit erforderlich, der maßgeblichen Teile | betrifft Anspruch |
|---|---|---|
| | US - A - 3 086 912 (M.E. BERGY et al.)<br><br>* Spalte 1, Zeile 15, Zeilen 32-34 *<br><br>-- | 1,5 |
| | US - A - 2 925 342 (W.C. SHERMAN et al.)<br><br>* Ansprüche 1-3,5,6; Spalte 2, Zeilen 12-17; Beispiele *<br><br>-- | 1,5 |
| | DE - B - 1 767 852 (R.I.T.)<br><br>* Spalte 1, Zeilen 53-66; Spalte 4, Zeilen 29-43 *<br><br>-- | 1,5 |
| | CHEMICAL ABSTRACTS, Band 77, Nr. 9, 28. August 1972, Seite 385, Nr. 60550d<br>Columbus, Ohio, U.S.A.<br>A. AUMAITRE et al.: "Supplementing suckling baby pig feed. Carbadox."<br><br>& RECL. MED. VET. 1970, (Pub. 1970) 148(3), 365-73<br><br>* Zusammenfassung *<br><br>-- | 1,6 |
| | ZEITSCHRIFT FUR TIERPHYSIOLOGIE, TIERERNÄHRUNG UND FUTTERMITTELKUN-DE, Band 36, 1976, Seiten 211-221<br>Hamburg, Berlin<br>K. BRONSCH et al.: "Olaquindox - ein neuer Wachstumspromotor in der Tierernährung"<br><br>* Seite 220, Zusammenfassung; Tabellen 1-5 *<br><br>--                    ./. | 1,6 |

KLASSIFIKATION DER
ANMELDUNG (Int.Cl. 3)

RECHERCHIERTE
SACHGEBIETE (Int. Cl. 3)

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | ZUCHTUNGSKUNDE, Band 48, Nr. 5, 1976, Seiten 402-406 Stuttgart, M. KIRCHGESSNER et al.: "Zum Einsatz von Fumarsäure in der Ferkelaufzucht" <br><br> * Seite 405, Zusammenfassung * <br><br> -- | 1,7 |
| | FR - A - 1 383 733 (COMMERCIAL SOLVENTS) <br><br> * Seite 2, Spalte 2, Zusammenfassung; Seite 1, Spalte 1, Abschnitte 1-3 * <br><br> -- | 1,7 |
| | DE - B - 1 073 845 (JOH. A. BENCKISER) <br><br> * Anspruch; Spalte 2, Zeile 37 - Spalte 3, Zeile 18 * <br><br> -- | 1,7 |
| | DE - B - 1 097 246 (JOH. A. BENCKISER) <br><br> * Anspruch; Spalte 1, Zeilen 30-39 * <br><br> -- | 1,7 |
| P,E | NL - A - 78 11789 (HENKEL) <br><br> * Ansprüche 1-4; Seite 2, Zeilen 14-21; Seite 3, Zeilen 4-36 * <br><br> & DE - A - 2 755 126 <br><br> & DE - A - 2 802 397 <br><br> -- | 1-4,6 |
| P,E | DE - A - 2 802 398 (HENKEL) <br><br> * Anspruch 1; Seite 3, Abschnitte <br><br> ./. | 1-5 |

**KLASSIFIKATION DER ANMELDUNG (Int.Cl. 3)**

**RECHERCHIERTE SACHGEBIETE (Int. Cl. 3)**

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | 1,2; Seite 4, Abschnitte 3,4 * | | |
| P,E | DE - A - 2 753 309 (HENKEL) <br> * Anspruch 1; Seite 4, Abschnitte 2,3 * | 1-5 | |
| P,E | DE - A - 2 802 396 (HENKEL) . <br> * Anspruch 1; Seite 3, Abschnitt 2; Seite 4, Abschnitte 2,3 * | 1-5 | RECHERCHIERTE SACHGEBIETE (Int. Cl. 3) |
| P,E | DE - A - 2 831 306 (HENKEL) <br> * Anspruch 1; Seite 3, Zeile 21 Seite 4, Zeile 1; Seite 4, Zeile 22 - Seite 5, Zeile 18 * | 1-4,7 | |